Europäisches Patentamt

European Patent Office

Office européen des brevets

(19)

(11) Publication number: **0 377 761**
**A1**

(12) **EUROPEAN PATENT APPLICATION**

(21) Application number: **89100292.5**

(22) Date of filing: **10.01.89**

(51) Int. Cl.5: **F02M 45/02, F02M 45/08, F02B 19/10**

Amended claims in accordance with Rule 86 (2) EPC.

(43) Date of publication of application:
**18.07.90 Bulletin 90/29**

(84) Designated Contracting States:
**CH DE FR GB IT LI SE**

(71) Applicant: **Baranescu, George Stan**
**5316 Howard Avenue**
**Western Springs Illinois 60558(US)**

(72) Inventor: **Baranescu, George Stan**
**5316 Howard Avenue**
**Western Springs Illinois 60558(US)**

(74) Representative: **Weinmiller, Jürgen**
**Lennéstrasse 9 Postfach 24**
**D-8133 Feldafing(DE)**

(54) **Internal combustion engine with broad fuel tolerance and low emissions.**

(57) An internal combustion engine operating with fuel injection, the fuel charge of each cylinder of the engine being divided in two portions of different amount, injected sequentially starting with the portion of smaller amount. The two portions of the fuel charge are injected through their own injector in different combustion chambers, or through the same injector in the same combustion chamber. The smaller portion of the fuel charge is accumulated in the injector which delivers this portion of the fuel charge. The accumulation occurs during the injection of the larger portion of the fuel charge. The accumulated fuel is injected in the next cycle by fuel expansion. When the portions of the fuel charge are injected in the same combustion chamber the engine can operate with the large portion of the fuel charge preceded and followed by small portions.

FIG. 1

EP 0 377 761 A1

## INTERNAL COMBUSTION ENGINE WITH BROAD FUEL TOLERANCE AND LOW EMISSIONS

The invention relates to an internal combustion engine having the capacity to operate with a broad variety of fuels using one fuel at a time.

Several methods have been proposed for achieving fuel tolerance of internal combustion engines using one fuel at a time. These methods, which mostly refer to diesel engines, use spark assistance, ignition on a hot surface, the increase of air temperature at the time of fuel injection, and ignition by a flame jet. The engines operating according to these methods are either not practical or do not achieve a large fuel tolerance.

The object of the invention as described and claimed further is to provide an internal combustion engine of simple design, which can operate with a broad range of fuels, and generates low emissions. Each cylinder of the engine includes either an open and a separate combustion chamber connected to each other, or only an open combustion chamber. In the former case each combustion chamber is provided with its own injector. In the latter case each cylinder includes only the injector of open chamber.

The fuel charge of every cycle is divided in two, eventually in three portions of different amount, which are injected sequentially at selected timings. The fuel injection starts with a small portion of the fuel charge, which is delivered into separate combustion chamber if the engine includes such combustion chamber, or into open combustion chamber; this portion of the fuel charge is electrically ignited. Then follows the injection of the large portion of the fuel charge, which occurs into open combustion chamber, and is achieved by the injection pump in conventional way; this portion of the fuel charge is ignited by the burning gases generated by the combustion of the small portion of the fuel charge previously injected. When the fuel charge is divided in three portions, the third portion is injected into open combustion chamber after the injection of the large portion of the fuel charge; the combustion of this portion of the fuel charge occurs mostly by self ignition.

All portions of the fuel charge are achieved by the same injection pump. The small portions of the fuel charge are accumulated in the injector through which each of these portions are injected. The accumulation occurs during the injection of the large portion of the fuel charge, and the injection of the accumulated portions is achieved by fuel expansion. The injection timing and the amount of the small portions of the fuel charge are controlled by valves. The injection timing and the amount of the larger portion of the fuel charge are controlled by the injection pump. Further, the small portions of the fuel charge are called pilots.

The manner in which the invention is carried into practice, the methods of operation, and further objects and advantages of the invention are set forth in the following specification, wherein the invention is described in further detail by reference to the accompanying drawing.

In the drawing:

Figure 1 shows in a schematic way the general configuration of the engine provided with open and separate combustion chambers.

Figure 2 shows in a schematic way the general configuration of the engine provided with open chamber only.

Figure 3 represents an embodiment of the injector which delivers the first pilot into separate combustion chamber, including a 2-way electromagnetic valve located on the connection between the accumulator and the nozzle.

Figure 4 represents an embodiment of the injector which delivers the first pilot into separate combustion chamber, wherein the connection between the accumulator and the nozzle chamber is opened and closed by a discharge valve whose operation is controlled by a 2-way electromagnetic valve.

Figure 5 represents an embodiment of the injector which delivers the first pilot into separate combustion chamber, provided with a valve which controls the fuel pressure in the accumulator.

Figure 6 represents an embodiment of the injector which delivers the first pilot into separate combustion chamber, including two 2-way electromagnetic valves located on the connection between the accumulator and the nozzle chamber.

Figure 7 represents the injector of figure 5 in a configuration which allows the injection of all portions of the fuel charge in open combustion chamber, wherein the high pressure channel is connected to the nozzle chamber through a one-way check valve.

Figure 8 represents the injector of figure 5 in a configuration which allows the injection of all the portions of the fuel charge in open combustion chamber, wherein one 2-way electromagnetic valve is substituted with a 3-way electromagnetic valve connected to the nozzle, to the second electromagnetic valve, and to high pressure channel.

Figure 9 represents the injector of figure 8 provided with a pressure relief valve which limits the maximum pressure into accumulator.

Figure 10 represents the injector of figure 3 modified for the delivery of all portions of the fuel charge into the same combustion chamber, the accumulator being located in the housing of the nozzle spring.

Figure 11 represents the injector of figure 4 modified for the delivery of all portions of the fuel charge into the same combustion chamber.

Figure 12 represents the injector of figure 5 modified for the delivery of all portions of the fuel charge into the same combustion chamber.

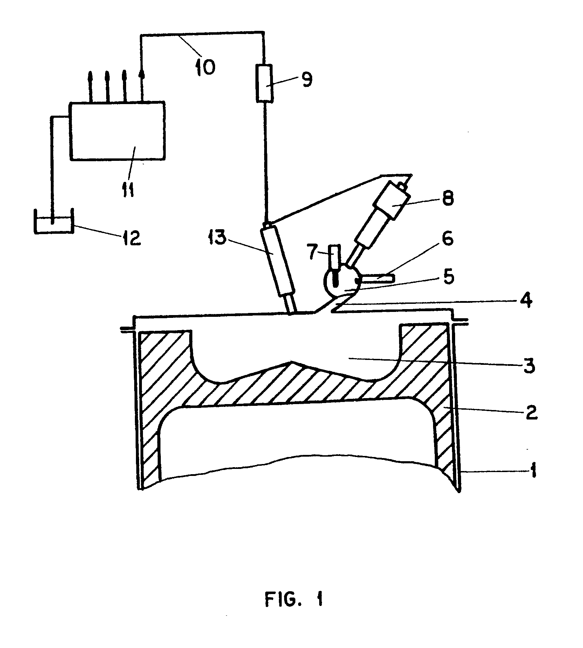

The general configuration of the engine provided with open and separate combustion chambers, is shown in figure 1 where only one cylinder have been represented. The engine includes cylinder 1, piston 2 wherein as an example the open combustion chamber 3 is located, cylinder head provided with a conventional injector 13, and ignition chamber 5 connected with open chamber 3 via channel 4. As an example the ignition chamber represented in figure 1 is of swirl type; any other type of combustion chamber, which satisfies the requirements of the engine according to the invention can be used. The ignition chamber 5 includes the injector 8 of a new design, the spark plug 6, and the glow plug 7 which is mostly used to ensure the cold start of the engine. The spark plug 6 is connected to a spark ignition system, and the glow plug 7 to a source of electricity. These connections are not represented in figure 1. Instead of a conventional spark plug and a conventional glow plug, a dual plug which can operate as a spark plug as well as a glow plug can be used, if the size of the ignition chamber do not allow the location of independent spark plug and glow plug. The injectors 8 and 13 are connected to the injection pump 11 by the same high pressure line 10 provided with heater 9. The connection of injector 8 to the injection pump is achieved via injector 13. The injection pump 11 is connected to the fuel tank 12. The other usual components of the engine are not represented in figure 1.

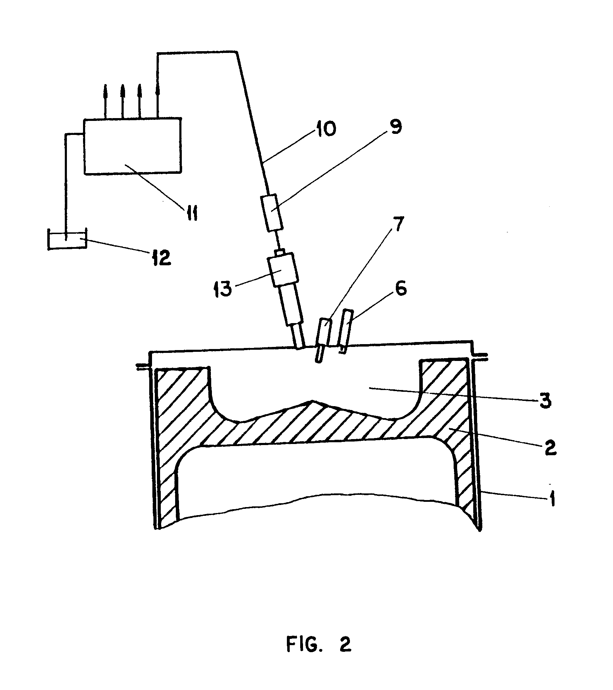

The general configuration of the engine provided with open chamber only is shown in figure 2. The injector 13 of open chamber has in this case a design similar to that of injector 8 of figure 1. The open combustion chamber 3 is provided either with an independent spark plug 6 and glow plug 7, or with a dual plug as previously shown in connection with figure 1. The glow plug is used not only at the engine start, but also in certain or all operating conditions according to fuel characteristics. The location of the glow plug is selected to facilitate the vaporization and mixing with air of the first pilot, whose ignition is achieved by the spark plug as in the case of figure 1.

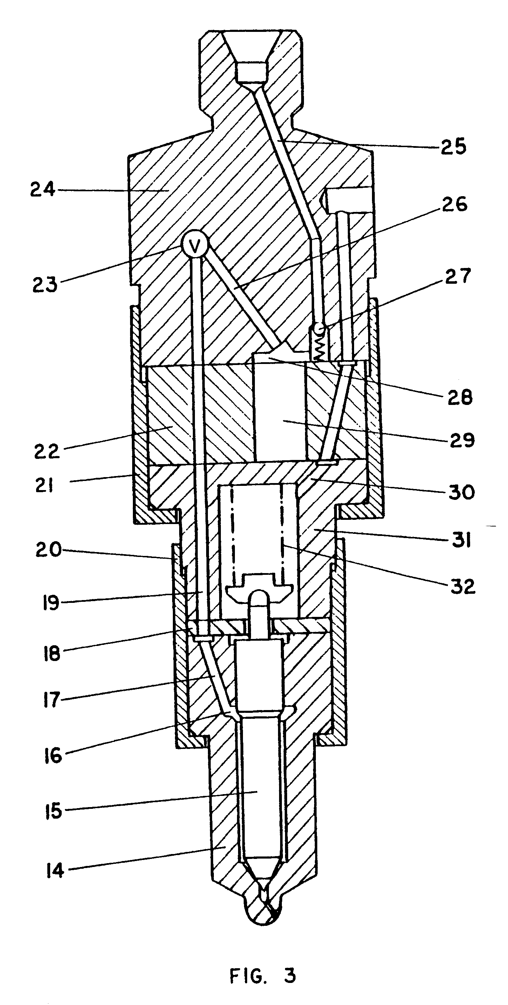

One embodiment of the injector 8 is represented in figure 3. The injector is provided with a conventional nozzle, which includes the body 14, and nozzle needle 15 actuated by spring 32 located in housing 31. The nozzle needle lift is limited by the disc 18. The injector includes the accumulator 29 located in barrel 22. The accumulator is connected with high pressure channel 25 via channel 28 and one-way check valve 27, as well as with the chamber 16 of the nozzle 14 via channels 28 and 26, 2-way electromagnetic valve 23, and channels 19 and 17. The fuel leakage between nozzle needle 15 and nozzle body 14 is collected in the room of spring 32 and drained through channel 30. The nozzle body 14, disk 18, and housing 31 are assembled by the retaining nut 20, and barrel 22 is assembled with housing 31 and upper part 24 by the retaining nut 21. The engine operates as follows. Before the start of injection in the ignition chamber 6 (figure 1) the fuel pressure in the accumulator 29 and channel 26 is higher than the opening pressure of nozzle needle 15. The electromagnetic valve 23 is closed, and the fuel pressure downstream from this valve is lower but near the closing pressure of nozzle needle 15.

When the injection of the pilot in the ignition chamber 6 (figure 1) shall start, the electromagnetic valve 23 is opened. The accumulator 29 discharges into channel 19, the fuel pressure in nozzle chamber 16 increases, the nozzle needle 15 opens, and the injection of the pilot in the ignition chamber starts. At a selected moment the electromagnetic valve 23 is closed. The injection of the pilot continues until the pressure of the fuel downstream from the electromagnetic valve 23 decreases just under the closing pressure of the nozzle needle 15.

To achieve the injection of the pilot as described above, the amount of fuel which flows from the accumulator shall increase the pressure downstream from the accumulator at least up to the opening pressure of the nozzle needle 15. Therefore the accumulator shall be large enough to satisfy this condition, even for the operating conditions wherein the pressure in the accumulator is the lowest.

The start of the pilot injection can be modified in large limits because the electromagnetic valve 23 can be opened at any time between the closing of the exhaust valve and late compression stroke. The amount of the pilot is controlled by the closing timing of the electromagnetic valve 23.

Whichever is the timing of the pilot injection the gases in which the fuel is injected have high temperature because 1) the walls of the ignition chamber 6 are hot, and 2) the temperature of the residual combustion gases is high. If necessary, the ignition chamber can be low cooled or insulated.

The possibility to inject the pilot as early as necessary, the fine atomization of the fuel achieved by high pressure injection, and the high temperature in the ignition chamber, ensures a fast and advanced vaporization of the fuel whichever the fuel volatility and viscosity may be. The pilot mixes with the air coming from the open combustion chamber 3 during compression stroke. A near homogeneous fuel-air mixture is achieved due to the turbulent flow.

At a selected moment this mixture is spark ignited. A combustion of flame propagation type occurs in the ignition chamber, because of near homogeneous fuel-air mixture. Due to combustion progression, the pressure in the ignition chamber 6 increases. Therefore burning gases are ejected into open chamber 3. The fuel charge of open chamber is injected into the incoming burning gases by the conventional injector 13 (figure 1). A fast ignition and a smooth combustion occurs in the open chamber whichever is the self-ignition property of the used fuel because 1) the incoming burning gases have considerably increased the air motion in open chamber, which accelerates the mixing between fuel and air; 2) the radiation and the high temperature of the incoming burning gases produce a fast vaporization of the injected fuel; 3) the incoming burning gases have high concentration of reactive particles, which accelerate and even shorten the chain reactions on which the ignition and combustion of the respective fuel proceed.

The accumulation of the fuel necessary to achieve the injection of the pilot into the ignition chamber 6 in the next cycle occurs during the injection of the fuel charge of open chamber 3. Because the high pressure channel 25 (figure 3) is in open connection with high pressure line 10 (figure 1), the fuel pressure in channel 25 increases when the injection pump delivers fuel into high pressure line 10. When the fuel pressure in channel 25 becomes higher than the residual pressure in accumulator 29 the one-way check valve 27 opens and fuel from channel 25 flows into accumulator 29 via channel 28. After the fuel pressure in line 10 has reached the maximum for the respective cycle of the engine, the fuel pressure in channel 25 decreases, the one-way check valve 27 closes, and therefore the accumulation of the fuel ends.

The control of the timing and amount of pilot by the electromagnetic valve 23 requires a very fast acting valve. This inconvenience can be avoided by using the electromagnetic valve 23 only for the control of the start of accumulator discharge towards the nozzle. The electromagnetic valve 23 remains open for a period of time longer than the duration of pilot injection. In this case the injection of the pilot ends when the fuel pressure in the accumulator and in the volume downstream from the accumulator becomes lower but near the closing pressure of the injector.

The above described mode of operation do not allow the control of the pilot amount. The pilot amount depends on the size of the accumulator, and of the maximum pressure of the injection cycle; the higher the maximum fuel pressure of the injection cycle, the higher the amount of pilot. However, the mode of operation allows a longer time for the closing of the electromagnetic valve 23: the valve shall be closed before the fuel pressure in accumulation or 29 becomes equal to the opening pressure of the nozzle 14, for avoiding a second fuel injection into ignition chamber 6 during the same engine cycle.

If the characteristics of the fuels used by the engine allow the early delivery of the fuel charge of ignition chamber 6 (figure 1), a relatively slow acting electromagnetic valve 23 can be used. But if the range of fuels used by the engine includes high volatile low knock resistance fuels, a fast acting electromagnetic valve is necessary, because such fuels shall be injected during mid or late compression stroke for avoiding uncontrolled combustion in the ignition chamber. Consequently the period of time from the opening of the electromagnetic valve 23 to the moment when the fuel pressure in the accumulator 29 becomes equal to the opening pressure of the nozzle 14 is short.

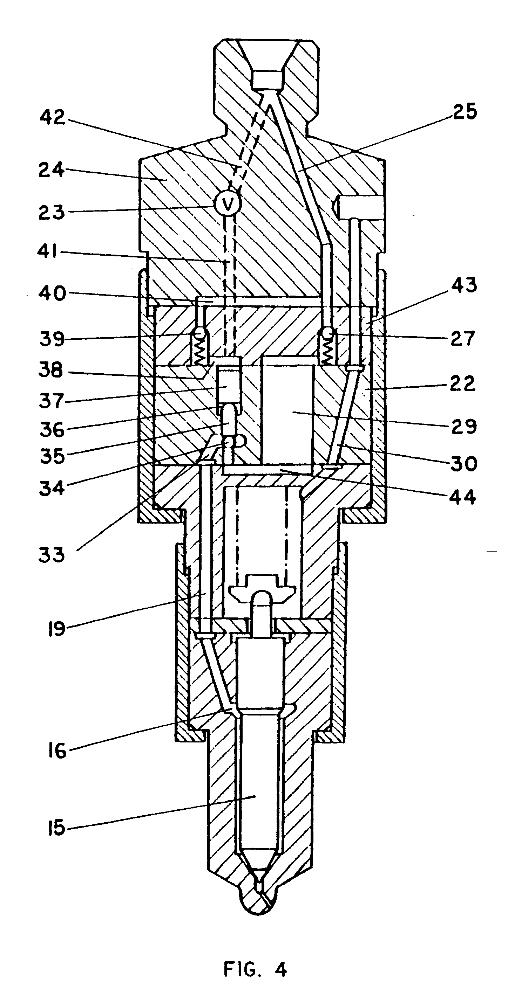

A certain extension of the period of time available for the closing of the connection between the accumulator 29 and nozzle 14 can be obtained by using a hydraulically actuated and electrically controlled discharge valve 34, located on the connection between the accumulator and the nozzle as shown in figure 4.

The accumulator discharge valve 34 is connected to accumulator 29 via channel 44, and to channel 19 via channel 33. This valve can be of any type. As an example a ball type valve was considered in figure 4. The accumulator discharge valve 34 includes the stem 35 in contact with piston 37 whose diameter is larger than that of stem 35. The chamber above piston 37 is connected to high pressure channel 25 via channel 38, one-way check valve 39, and channel 40, as well as via channel 38, control channel 41, electromagnetic valve 23, and channel 42. As an example the one-way check valves 27 and 39 are located in the additional barrel 43; these valves can be also located in the upper part 24. The fuel leakage between barrel 22, stem 35 and piston 37 are collected in chamber 36, and drained through a channel which is not represented in figure 4.

The accumulator discharge valve 34 operates as follows. Before the start of injection into ignition chamber 6 (figure 1) the electromagnetic valve 23 is closed. The fuel pressure in control channel 41 is lower than the fuel pressure in the accumulator 29, but high enough to maintain the accumulator discharge valve 34 closed against the forces generated on stem 35 by the fuel pressure in channels 33 and 44. The fuel pressure in high pressure channel 25 is the residual pressure in high pressure line 10 (figure 1), which is lower than the fuel pressure in control channel 41.

When the fuel injection in the ignition chamber 6 (figure 1) shall start the electromagnetic valve 23 is opened. The control channel 41 discharges into high pressure channel 25 via channel 42, the fuel pressure above piston 37 drops, valve 34 opens, the accumulator 29 discharges towards nozzle chamber 16, nozzle needle 15 opens, and the injection of the fuel charge of ignition chamber 6 occurs. This injection ends when the fuel pressure downstream the accumulator 29 drops under the closing pressure of the nozzle needle 15. At the end of the injection, the fuel pressure in the accumulator 29 and in the volume downstream from the accumulator is lower but near the closing pressure of the nozzle needle 15.

When the injection pump 11 starts to deliver fuel into high pressure line 10 (figure 1), the fuel pressure in high pressure channel 25 increases. A fuel flow occurs from this channel into the chamber above piston 37 via channels 42,41 and 38, because at that time the electromagnetic valve 23 is still open. Fuel also flows into channel 38 via channel 40 and one-way check valve 39. The force acting on accumulator discharge valve 34 in the sense of valve closing increases. When the fuel pressure above piston 37 reaches a certain value, the accumulator discharge valve 34 is closed. The closing pressure is lower than the residual pressure in the accumulator 29 because the diameter of piston 37 is larger than that of stem 35. Therefore valve 34 is closed before the start of fuel penetration into accumulator 29. The fuel flow into chamber above piston 37 through channel 41 and one-way check valve 39 as well as through channel 41, and the discharge of the chamber only through channel 41, ensures a fuel flow in this chamber, which prevents the fuel overheating.

Due to the further increase of fuel pressure in high pressure channel 25 the one-way check valve 27 opens and fuel from channel 25 flows into accumulator 29. After the fuel pressure into high pressure channel 25 has reached the maximum for the respective cycle of the engine, the fuel pressure in this channel decreases, the one-way check valve 27 closes, and the fuel accumulation ends. Because the electromagnetic valve 23 is still open, a portion of the fuel existing in the volume above piston 37 discharges into high pressure channel 25 via channels 41 and 42, until the electromagnetic valve 23 is closed. Due to this discharge the fuel pressure in control channel 41 is lower than in the accumulator 29, and remains so until the next engine cycle as previously shown.

The electromagnetic valve 23 shall be closed at or before the moment when the fuel pressure above piston 37 has decreased to the minimum pressure which still maintains valve 34 closed. The larger the diameter of piston 37, the later the closing of the electromagnetic valve 23 can be. Thus, the injector of figure 3 allows the closing of the electromagnetic valve 23 in a longer period of time than the injector of figure 2.

As previously shown the fuel charge of ignition chamber 6 (figure 1) delivered by the injectors of figures 3 and 4 increases with load and speed, because this fuel charge depends on the maximum pressure in high pressure channel 25, which increases with load and speed.

For some applications, the fuel charge of ignition chamber 6 delivered by the injectors of figures 3 and 4 may be too large at high load and/or speed. To prevent this situation a control of the amount of fuel charge of ignition chamber shall be provided. Such control can be achieved in several ways: 1) by limiting the amount of fuel which flows into accumulator 29; 2) by draining a portion of the accumulated fuel before the start of injection into the ignition chamber 6; 3) by allowing only a partial discharge of the accumulator 29 towards the nozzle 14.

The limitation of the amount of fuel which flows into accumulator 29 can be achieved by providing a control on high pressure channel 25 (figures 3,4). As an example a 2-way electromagnetic valve located on this channel can be used. This valve is opened before the injection pump 11 starts to deliver fuel into line 10 (figure 1). When the selected amount of fuel has flown into accumulator 29, the electromagnetic valve is closed. A slow acting electromagnetic valve can be used, because almost the duration of an engine cycle is available to open again this valve.

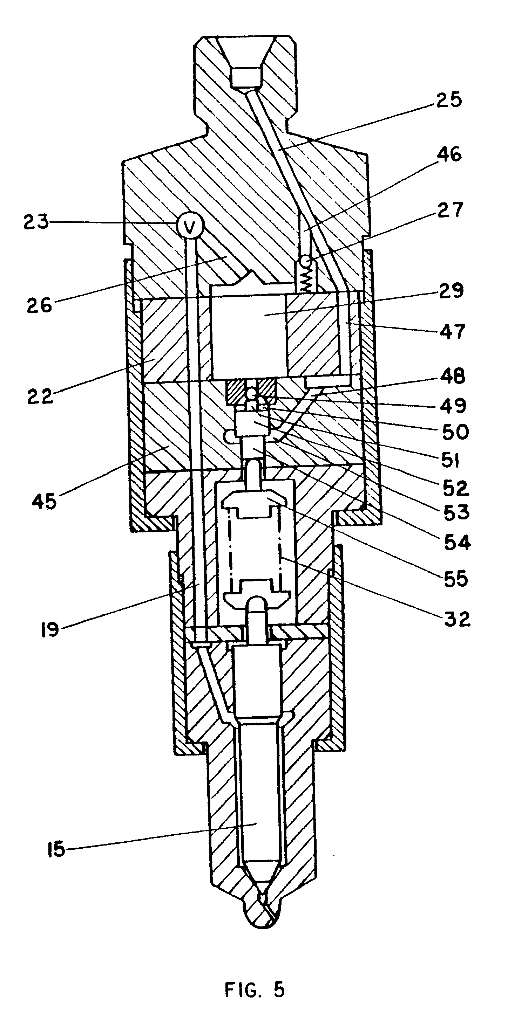

The drain of a portion of the accumulated fuel can be achieved by providing the injector of the ignition chamber 6 with a pressure control valve, as shown in figure 5 wherein, as an example, a hydromechanical pressure control valve was considered. The injector has all the components of the injector of figure 3. Additionally the injector of figure 4 includes barrel 45 in which the pressure control valve 49 is located. This valve is actuated by the spring 32 of the nozzle needle 15. The spring force is transmitted to valve 49 by the spring support 55, which acts on pistons 54 and 52 forming together one piece, and by the cylindrical portion 51 of piston 52. Chamber 53 is connected to high pressure channel 25 via channels 48 and 47. Chamber 50 is drained by a channel which is not represented in figure 4. The accumulator 29 is directly connected to pressure control valve 49. The one-way check valve 27 is connected to high pressure channel 25 via channel 46. The drain 30 (figures 3 and 4) has not been represented in figure 5.

The accumulation of the fuel charge of ignition chamber 6 occurs as described in connection with figure 3. During the injection of the fuel charge of open chamber 3 (figure 1) valve 49 remains closed whichever is the pressure in the accumulator 29, because the fuel pressure in chamber 53 is equal to fuel pressure in high pressure channel 25. Consequently the pressure control valve 49 is maintained on its seat by the force of spring 32, as well as by the force generated on piston 52 by the fuel pressure in chamber 53. After the end of injection in open chamber 3 the pressure in high pressure channel 25 as well as in chamber 53 decreases to the residual pressure in high pressure line 10 (figure 1). Valve 49 opens and a portion of the fuel of the accumulator 29 is drained via chamber 50. This portion depends on the residual pressure in chamber 53, therefore on load and speed; the higher the load and speed, the higher the residual pressure, and consequently the smaller the discharge of the accumulator.

Thus, the injector of figure 5 achieves a fuel charge of ignition chamber 6 whose size increases with load and speed, as the injectors of figures 3 and 4 do. However, the increase of the fuel charge is attenuated by the partial discharge of the accumu lator 29 achieved by the pressure control valve 49. The attenuation can be controlled by a corresponding selection of the diameters of pistons 54 and 52, and the diameter of the channel controlled by the valve 49.

The operation of pressure control valve 49 avoids any interference between the discharge of the accumulator 29 and the injection of the fuel charge of open chamber 3, because the discharge occurs after the end of fuel injection into open chamber 3. The dynamics of the discharge does not have an impact on the fuel injection into ignition chamber 6 in the next cycle, due to relatively long period of time available for the discharge. This period of time extends from the end of fuel injection into open chamber 3, to the next opening of the electromagnetic valve 23. Consequently there is enough time to complete the discharge before the start of the injection into ignition chamber 6.

The injector of figure 5 delivers a constant amount of fuel into ignition chamber 6 if the high pressure section of the injection system is connected to the fuel tank 12 (figure 1) between consecutive injections into open chamber. In this case the residual pressure in line 10 is the same at any operating regime of the engine. Therefore the pressure in the accumulator 29 at the end of the discharge into chamber 50 is always the same, because this pressure depends only on the force of spring 32, and on the diameter of the channel controlled by the valve 49. Thus, the injector delivers a constant amount of fuel at any operating conditions. For a given spring 32, the size of the fuel charge of ignition chamber 6 can be tailored by selecting the volume of the accumulator 29 and the diameter of the channel controlled by the valve 49.

The connection of high pressure section of the injection system to the fuel tank 12 (figure 1) can be achieved through a derivation controlled by a valve whose operation is electronically programmed, or through and controlled by the injection pump. The connection through a derivation allows the operation of the injector of figure 5 with a constant or variable fuel charge of the ignition chamber 6 (figure 1), as the high pressure section of the injection system is/is not connected to the fuel tank 12 between consecutive injections into open chamber 3, respectively.

The pressure control valve 49 of figure 5 can also be used in the embodiment of figure 4.

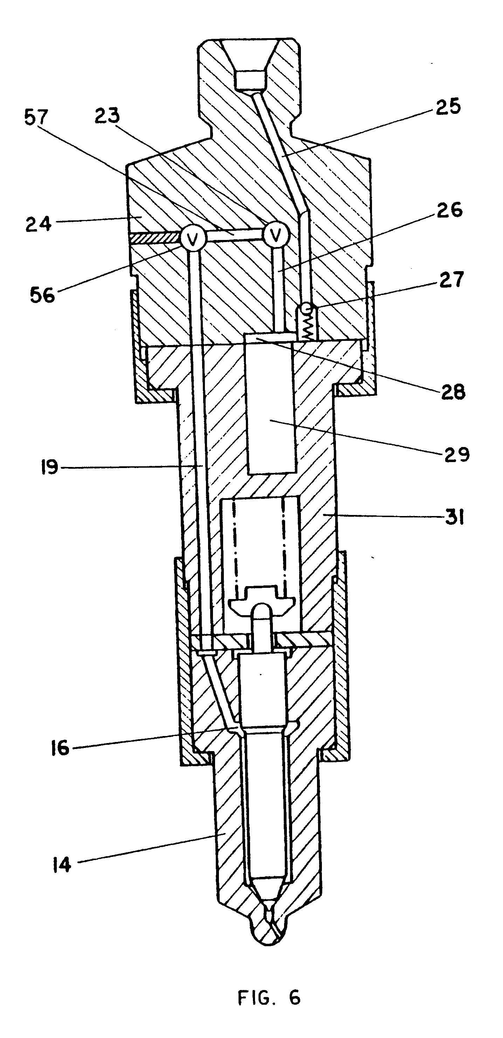

The partial discharge of the accumulator towards the nozzle can be achieved by providing an additional control on the connection between the accumulator 29 and nozzle chamber 16, as shown in figure 6, wherein the additional control includes, as an example, a 2-way electromagnetic valve.

The injector of figure 6 has the components of the injector of figure 3. As a variant the accumulator 29 is located in housing 31 which allows the elimination of barrel 22 (figure 3). The injector includes an additional 2-way electromagnetic valve 56 connected to nozzle chamber 16 via channel 19, and to electromagnetic valve 23 via channel 57. Before the start of injection in the ignition chamber 6, the electromagnetic valve 23 is closed and the electromagnetic valve 56 is open. To start the discharge of the accumulator 29 towards nozzle chamber 16, the electromagnetic valve 23 is opened. To end the discharge of the accumulator 29 towards nozzle chamber 16, the electromagnetic valve 56 is closed. The earlier the closing of the electromagnetic valve 56, the smaller the discharge of the accumulator, and therefore the smaller the amount of fuel injected in the ignition chamber 6. The fuel charge of ignition chamber 6 can be tailored by a corresponding selection of the closing timing of the electromagnetic valve 56.

The injector of figure 6 can operate as described by using slow acting electromagnetic valves 23 and 56, because almost the duration of an entire engine cycle is available for switching the electromagnetic valves back in the initial positions.

To prevent a premature discharge of the accumulator 29 towards nozzle chamber 16 first the electromagnetic valve 23 is closed, and then the electromagnetic valve 56 is opened.

The injectors of figures 3-6 can inject both portions of the fuel charge into the same combustion chamber, if the high pres sure channel 25 is also connected to nozzle chamber 16, and means are provided for preventing the discharge of the accumulator into high pressure channel during the discharge of the accumulator towards the nozzle. Therefore these injectors can be used for the engine provided with open chamber only (figure 2).

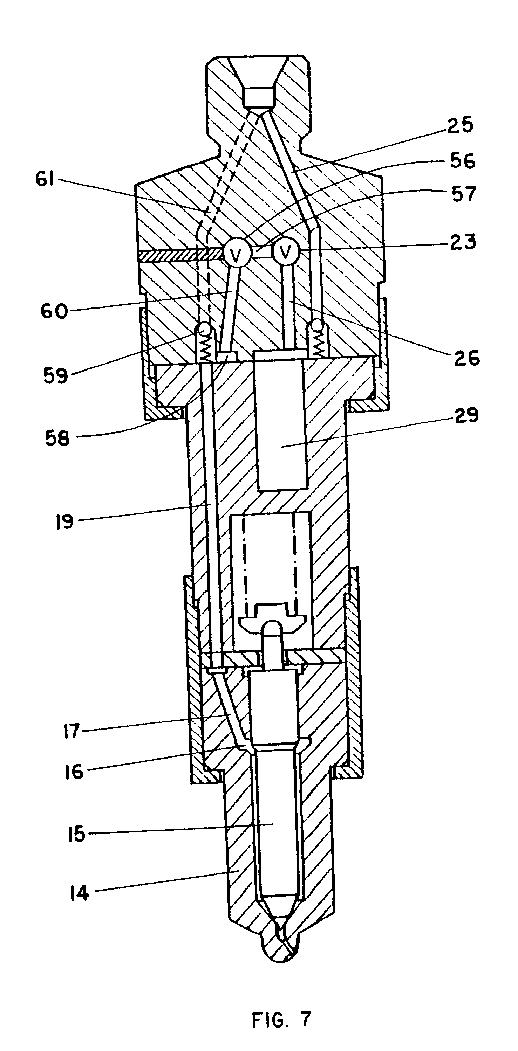

As examples, such configurations are shown for the injector of figure 6. Figure 7 shows the injector of figure 6 provided with a connection between high pressure channel 25 and nozzle chamber 16, achieved via channel 61, one-way check valve 59, and channels 19 and 17. The 2-way electromagnetic valve 56 is connected to channel 19 by channels 60 and 58, just downstream from the one-way check valve 59. During the discharge of the accumulator 29 towards the nozzle chamber 16, achieved as shown in connection with figure 6, a fuel flow in channel 61 is prevented by the one-way check valve 59. When the injection pump 11 delivers fuel into high pressure line 10 (figure 1) the accumulation of the smaller portion of the fuel charge and the injection of the larger portion of the fuel charge occur. The latter injection is achieved like by a conventional injector. At the end of each injection the fuel pressure in the volume downstream from the one-way check valve 59 is lower but near the closing pressure of the nozzle needle 15.

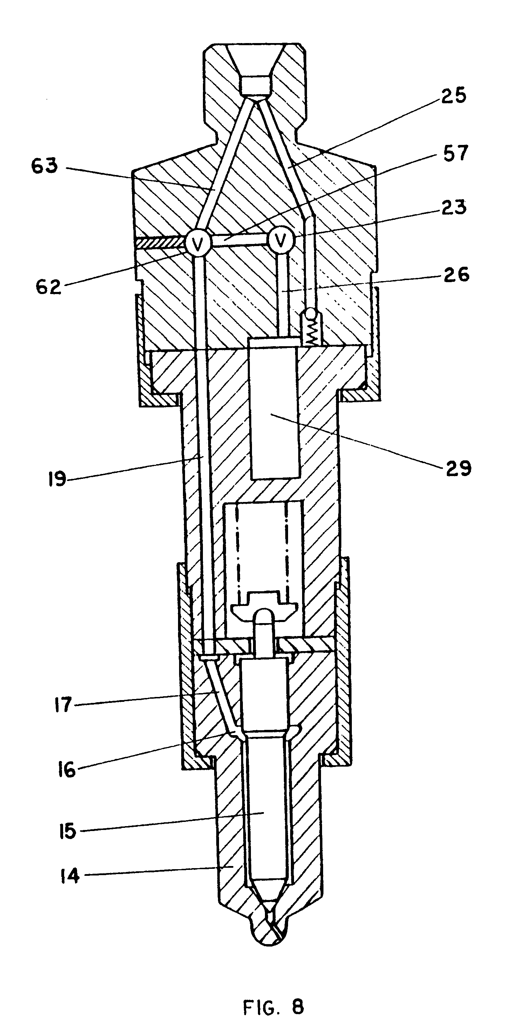

The injector represented in figure 8 allows the injection of both portions of the fuel charge, as well as the discharge of the nozzle chamber 16 after each of the two injections. The injector is that of figure 5 wherein the 2-way electromagnetic valve 56 is substituted with a 3-way electromagnetic valve 62, which is connected to channel 19, to 2-way electromagnetic valve 23 via channel 57, and to high pressure channel 25 via channel 63. The 3-way electromagnetic valve 62 can connect channel 19 either to channel 57 or to channel 63, by closing channels 63 or 57, respectively. Before the discharge of the accumulator 29 towards the nozzle chamber 16, the electromagnetic valve 23 is closed and the electromagnetic valve 62 is switched in the position wherein channel 63 is closed and channel 57 is opened. To start the discharge of the accumulator 29 towards the nozzle chamber 16 the electromagnetic valve 23 is opened. To end the discharge of the accumulator towards the nozzle chamber 16 the electromagnetic valve 62 is switched in the position wherein channel 57 is closed and channel 63 is opened; valve 62 is maintained in this position until the next cycle. As a result the nozzle chamber 16 discharges into high pressure line 10 (figure 1) via channels 17, 19, electromagnetic valve 62, and channels 63 and 25. When the injection pump 11 delivers fuel into high pressure line 10, the injection of the larger portion of the fuel charge occurs, because channels 63 and 19 are connected. After this injection is completed, chamber 16 discharges again in high pressure line 10. Both electromagnetic valves of the injector of figure 8 can be slow acting, because almost the duration of an engine cycle is available to switch the electromagnetic valves back in the initial positions. To avoid a premature discharge of the accumulator 29 towards the nozzle chamber 16, first the electromagnetic valve 23 is closed, and then the electromagnetic valve 62 is switched in the position wherein channel 57 is open.

The injector of figure 8 can substitute the injector of figure 6 used in the configuration of the engine shown in figure 1, for the injection of the pilot into ignition chamber. This substitution has the advantage that the nozzle chamber of the injector of ignition chamber is discharged towards channel 25 at the end of injection into ignition chamber.

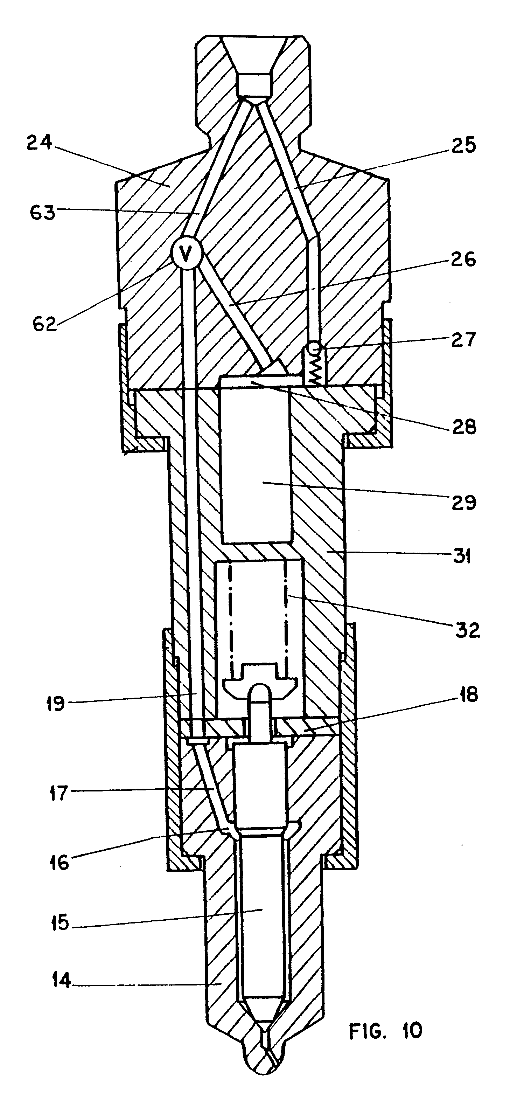

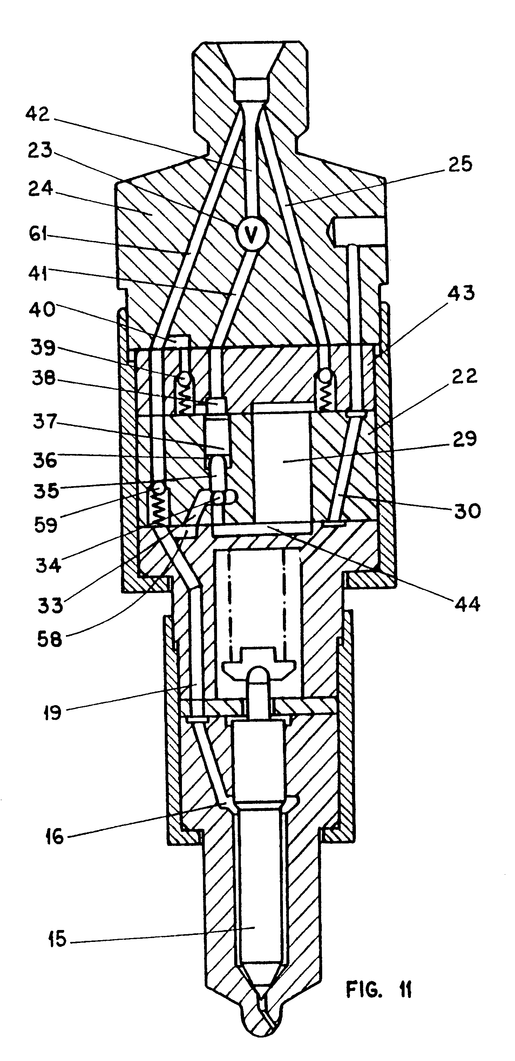

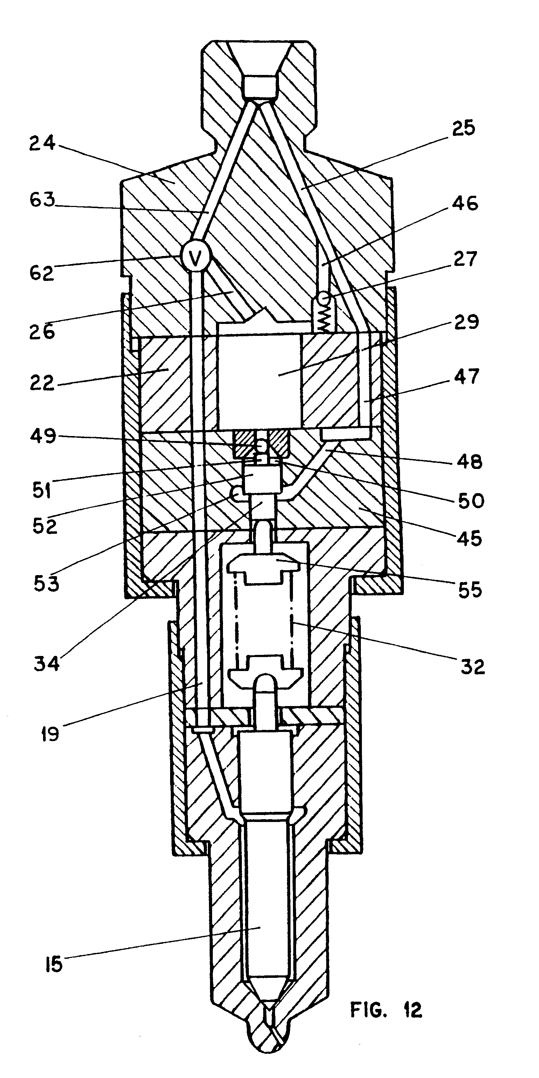

The injectors of figures 3-5 can be adapted in the same way to deliver the pilot and the large portion of the fuel charge into the same combustion chamber, for the use in the engine provided with open chamber only (figure 2). For example the injectors of figures 3 and 5 can be adapted to the above specified use by substituting the 2-way electromagnetic valve 23 with a three way electromagnetic valve 62 connected to channels 19 and 26 (figures 10, 12). To prevent the discharge of the accumulator into channel 25 during the switch of the 3-way electromagnetic valve 62 in the position wherein channels 26 and 19 are connected, and channel 63 is closed, a one-way check valve located on the latter channel can be provided. Figure 11 shows the adaptation of the injector of figure 4 for the delivery of both portions of the fuel charge into the same combustion chamber.

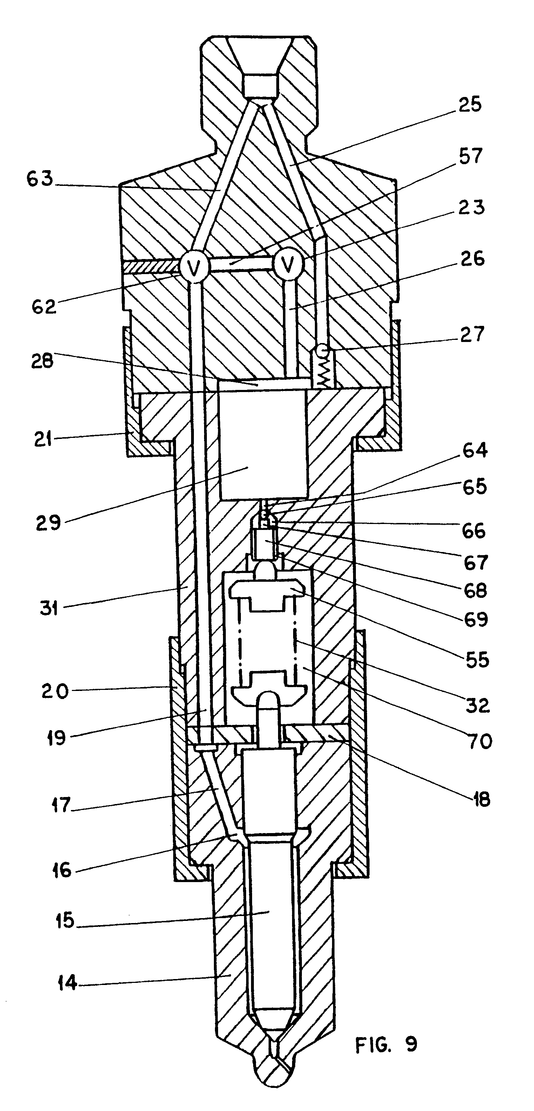

The injector of figure 8 can operate in a way which decreases the emissions of the engine at low load and idle. For this purpose the accumulator is provided with a pressure relief valve designed to open at a selected high pressure. The pressure relief valve 65 (figure 9) controls the connection 64 between the accumulator 29 and the injector drain via chamber 70 of injector needle spring 32. At medium and high load the injector of figure 9 operates as the injector of figure 8. At low load and idle the injection pump is set to deliver high amount of fuel, the delivery being advanced so that the injection pump ends the fuel delivery towards the nozzle before the fuel injection into the combustion chamber. During the fuel delivery by the injection pump the electromagnetic valve 23 is closed and the electromagnetic valve 62 is switched in the position wherein channels 19 and 57 are connected and channel 63 is closed. Consequently all the fuel delivered by the injection pump penetrates into accumulator 29. The pressure in the accumulator increases until it becomes equal to opening pressure of valve 65. The further fuel penetration in the accumulator 29 determines the drain from the accumulator of an equal amount of fuel.

To start the fuel injection the electromagnetic valve 23 is opened. To stop the fuel injection the electromagnetic valve 62 is switched in the position wherein channel 57 is closed, and channel 19 is connected to channel 63, which allows the discharge of the injector chamber 26 towards the high pressure line 10 (figure 2).

The described mode of operation ensures a very high injection pressure independently of load and speed. The atomization is highly improved which decreases the engine emission. The injection pressure can be controlled by a corresponding setting of the injection pump load.

The injector of figure 9 can precede the main injection with a fuel pilot. Before the injection pump starts to deliver fuel towards the nozzle the electromagnetic valve 62 is switched in the position wherein channel 57 is closed and channels 19 and 63 are connected. When the injection pump delivers fuel into high pressure line 10 (figure 2) the pressure in nozzle chamber 16 increases the nozzle opens and the injection of the pilot starts. To end this injection the electromagnetic valve 62 is switched in the position wherein channels 19 and 57 are connected, and channel 63 is closed. The injection of the large portion of the fuel charge is achieved by the accumulator as previously described. In this mode of operation the pilot is achieved by the injection pump which controls the timing of the pilot. The amount of pilot is controlled by the electromagnetic valve 62.

The injectors of figures 7-9 can deliver two pilots by discharging the accumulator twice during the same engine cycle. The first discharge of the accumulator occurs as described, before the injection of the large portion of the fuel charge is completed. The second discharge of the accumulator occurs after the injection of the large portion of the fuel charge. To achieve such operation the volume of the accumulator shall be correspondingly increased.

The electromagnetic valves which control the discharge of the accumulator shall be operated in a period of time shorter than that shown for the operation of these injectors with one pilot only. As an example the operation of these valves for the injector of figure 7 is further described. Before the start of the discharge of the accumulator which precedes the injection of the large portion of the fuel charge the electromagnetic valve 23 is closed, and the electromagnetic valve 56 is opened. To start the first discharge of the accumulator towards the nozzle valve 23 is opened. To end this discharge valve 56 is closed. To start the second discharge of the accumulator valve 56 is opened, and to end this discharge valve 23 is closed.

According to the mode of operation described above the second pilot is a portion of the fuel accumulated during the cycle in which the second pilot is delivered. The remained portion of the accumulated fuel is delivered in the next cycle, as the first pilot of that cycle.

The role of the first pilot is to achieve ignition and to support combustion of the large portion of the fuel charge, as previously described. The second pilot compensates partially the effect of gas expansion, which creates favorable conditions for the complete oxidation of the fuel charge.

To optimize the engine operation over the speed and load range, as well as according to the characteristics of the used fuels, the electromagnetic valves of the embodiments of figures 3-12 are electronically programmed.

In the injectors of figures 3-12 the channels have been represented with their axes situated in the same plane, for description purpose. Actually the channels shall be located around the injector axis for decreasing the size of the injector.

The internal combustion engine according to the invention has significant advantages.

The engine provided with ignition chamber has a broad fuel tolerance due to its new combustion system, and to high flexibility of fuel injection into the ignition chamber, which ensure the engine insensitivity to fuel volatility, viscosity, self-ignition property, and knock resistance.

A significant fuel tolerance has also the engine with undivided combustion chamber, because the first pilot can be delivered with an advance so that at the time when the large portion of the fuel charge is injected burning zones are created in the combustion chamber by the combustion of the first pilot.

The engine has improved efficiency because of the low variation of the specific fuel consumption over the load and speed range. This fact is mostly due to the fast fuel vaporization and improved fuel-air mixing of the larger portion of the fuel charge, achieved by the burning gases generated during the combustion of the smaller portion of the fuel charge. These effects are less dependent on load and speed.

In the case wherein the two portions of the fuel charge are injected in different combustion chambers the engine can be oper ated with combustion only in the ignition chamber at low load and idle. For this purpose the injector of the ignition chamber is designed to open at lower fuel pressure than the injector of open chamber. Consequently, at low load and idle fuel injection is achieved in the ignition chamber only. Because combustion in this chamber occurs in near homogeneous fuel-air mixture, the engine efficiency is also improved in the low load range.

The combustion system decreases significantly engine emission for the following main reasons; 1)- the ignition delay of the large portion of the fuel charge is short and therefore it is not necessary a trade-off of the injection of this portion in order to moderate the emission of nitrogen oxides; 2) the combustion of the large portion of the fuel charge is strongly supported by the first pilot; 3) at low load the engine with divided combustion chamber can be operated with combustion only in the ignition chamber, and the engine with undivided combustion chamber can inject the large portion of the fuel charge at high pressure.

The smooth combustion of the larger portion of the fuel charge reduces substantially the combustion noise, and improves the mechanical efficiency. The engine has easy cold start because the combustion starts by spark ignition and not by self-ignition. The manufacturing of the engine does not require new technologies of factory retooling.

The foregoing specification of the invention has been referred to some configurations and methods of operation, it being understood that many other configurations and methods of operation are possible within the essence and the scope of the invention.

**Claims**

1. An internal combustion engine including at least one cylinder, said internal combustion engine including an injection pump connected to injectors and to a fuel tank, each injector including a high pressure channel through which fuel penetrates into the injector, and a nozzle provided with a chamber and a delivery channel which is opened and closed by a valve actuated by a nozzle spring, each injector including also a drain, the combustion chamber wherein the first portion of the fuel charge is injected being provided with a spark plug connected to a spark ignition system and with a glow plug connected to a source electricity, or with a device which can operate as a spark plug and as a glow plug, the internal combustion engine including also means for fuel heating prior to fuel injection, said internal combustion engine being characterized by the capacity to divide the fuel charge of each cycle - when needed - in several portions of different amount, and to inject these portions in a selected order and at selected timings using only one injection pump, the portions of the fuel charge including a large portion, the remaining portions being of small amount, the small portions of the fuel charge being accumulated in the injector which deliver these portions, the accumulation occurring during the injection of the larger portion of the fuel charge achieved by the injection pump, the accumulated fuel being injected by fuel expansion, the small portion of the fuel charge which is injected before the large portion of the fuel charge vaporizes and mixes with air in the combustion chamber wherein it is injected, and then the fuel-air mixture is spark ignited, the larger portion of the fuel charge being injected into the burning gases generated during the combustion of the small portion of the fuel charge previously injected, another small portion of fuel being injected--when necessary--after the injection of the large portion of the fuel charge,the accumulation, injection, and the control of the smaller portion of the fuel charge being achieved by providing the injector wherein the fuel accumulation occurs with means including
- an accumulator connected with the high pressure channel and with the nozzle chamber,
- means which prevents the discharge of the accumulator into high pressure channel,
- means which control the timing of the discharges of accumulator towards the nozzle chamber,
- means which control the amounts of fuel discharged from the accumulator towards the nozzle chamber.

2. An internal combustion engine as defined in claim 1, characterized in that said means which prevents the discharge of the accumulator into high pressure channel include one-way check valves.

3. An internal combustion engine as defined in claim 2, characterized in that engine includes an open combustion chamber connected with a separate combustion chamber, each combustion chamber being provided with its own injector, the injector of open combustion chamber and the injector of separated combustion chamber being connected to the injection pump, said accumulator being located inside or outside the injector of separate combustion chamber, and connected with the nozzle chamber of this injector, the fuel charge of each engine cycle being divided in two portions of different amount, the small portion of the fuel charge being injected into separate combustion chamber wherein it vaporizes, mixes with air, and then is spark ignited, the large portion of the fuel charge being injected into the open combustion chamber starting from a selected moment during the ejection into this chamber of burning gases generated by the combustion of the small portion of the fuel charge in separate combustion chamber.

4. An internal combustion engine as defined in claim 2, characterized in that it includes only an open chamber provided with an injector connected to the injection pump, said accumulator being located inside or outside the injector of open combustion chamber and connected with the nozzle chamber of this injector, the fuel charge of each engine cycle being divided in several portions of different amount which are injected sequentially into the open combustion chamber through the same injector starting with a small portion, which vaporizes, mixes with air, and is spark ignited, the remaining portions of the fuel charge being injected at selected timings into open chamber starting with the large portion, during or after the combustion of the small portion of the fuel charge previously injected.

5. An internal combustion engine as defined in claim 3, characterized in that said means which control the timing and the amount of fuel discharged from the accumulator towards the nozzle chamber of the injector of separate combustion chamber include a 2-way electromagnetic valve electronically programmed, located on the connection between the accumulator and the nozzle chamber.

6. An internal combustion engine as defined in claim 3, characterized in that said means which control the timing of the discharge of the accumulator towards the nozzle chamber of the injector of separate combustion chamber include an accumulator discharge valve, said accumulator discharge valve including a chamber connected to high pressure channel by a channel provided with a one-way check valve, as well as by a control channel provided with a two-way electromagnetic valve electronically programmed, the accumulator discharge valve being opened by the pressure of the fuel existing in the connection between the accumulator and the nozzle chamber, when the 2-way electromagnetic valve opens the connection between the chamber of the accumulator discharge valve and high pressure channel, and closed by the pressure of the fuel trapped in the valve chamber when said 2-way electromagnetic valve is closed.

7. An internal combustion engine as defined in claim 3, characterized in that said means which control the timing of the discharge of the accumulator towards the nozzle chamber of the injector of separate combustion chamber includes a 2-way electromagnetic valve electronically programmed, located on the connection between the accumulator and the nozzle chamber.

8. An internal combustion engine as defined in claims 6 or 7, characterized in that said means which control the amount of the smaller portion of the fuel charge include a 2-way electromagnetic valve electronically programmed, located on the connection between the accumulator and high pressure channel, upstream from the one-way check valve which prevents the discharge of the accumulator into high pressure channel.

9. An internal combustion engine as defined in claim 4, characterized in that the nozzle chamber is connected to high pressure channel by a channel provided with a one-way check valve, said means which control the timing of the discharge of accumulator towards the nozzle chamber include an accumulator discharge valve, said accumulator discharge valve including a chamber connected to high pressure channel by a channel provided with a one-way check valve, as well as by a control channel provided with a 2-way electromagnetic valve electronically programmed, the accumulator discharge valve being opened by the pressure of the fuel existing in the connection between the accumulator and the nozzle chamber, when the 2-way electromagnetic valve opens the connection between the chamber of the accumulator discharge valve and high pressure channel, and closed by the pressure of the fuel trapped in the valve chamber when said 2-way electromagnetic valve is closed.

10. An internal combustion engine as defined in claim 4, characterized in that said means which control the timing of the discharge of accumulator towards the nozzle chamber includes a 2-way electromagnetic valve electronically programmed, located on the the connection between the accumulator and the nozzle chamber.

11. An internal combustion engine as defined in claim 10, characterized in that the nozzle chamber is connected to high pressure channel by a channel provided with a one-way check valve, said means which control the amount of small portions of the fuel charge include a 2-way electromagnetic valve electronically programmed, located on the connection between the accumulator and the nozzle chamber.

12. An internal combustion engine as defined in claim 10, characterized in that said means which control the amount of small portions of the fuel charge include a 3-way electromagnetic valve electronically programmed, which controls the timing of the discharge of the accumulator towards the nozzle chamber.

13. An internal combustion engine as defined in claim 12, characterized in that said accumulator is provided with a pressure relief valve actuated by the nozzle spring, said pressure relief valve limiting the maximum pressure in the accumulator to a selected value.

14. An internal combustion engine as defined in any of the claims 11-13, characterized in that the accumulator is discharged twice during each engine cycle towards the nozzle chamber, the first of these discharges preceding, and the second discharge following the injection of the large portion of the fuel charge.

15. An internal combustion engine as defined in claim 4, characterized in that said means which control the timing of the discharge of accumulator include a 3-way electromagnetic valve electronically programmed which can connect the high pressure channel of the nozzle either to accumulator, or to the injection pump.

16. An internal combustion engine as defined in any of the claims 6,7,9, or 15, characterized in that said means which control the amount of the small portions of the fuel charge include a pressure control valve which controls a connection between the accumulator and said drain, said pressure control valve being actuated by the nozzle spring whose force acts in the sense of valve closing, said pressure control valve including a chamber in open connection with high pressure channel of the injector, the force generated on the valve by the fuel pressure in said chamber acting in the sense of valve closing, said pressure control valve being designed to remain closed during the injection of the portions of the fuel charge, and to open after the injection of the portions of the fuel charge, when the fuel pressure in high pressure channel has decreased, which allows the partial discharge of the accumulator into said drain.

Amended claims in accordance with Rule 86(2) EPC.

1. An internal combustion engine including at least one cylinder (2), said internal combustion engine including an injection pump (11) connected to injectors (8, 13) and to a fuel tank (12), each injector including a high pressure channel (25) and a nozzle (14) provided with a chamber (16) and a delivery channel which is opened and closed by a valve (15) actuated by a nozzle spring (32), each injector including also a drain (30), the combustion chamber of each cylinder being divided or undivided, in the former case the separate combustion chamber (5) being provided with a spark plug (6) connected to a spark ignition system, and with a glow plug (7) connected to a source of electricity, or with a device which can operate as a spark plug as well as a glow plug, such electric means being provided in the open combustion chamber (3) if the combustion chamber of each cylinder is undivided and the engine is designed to operate with fuels having low self-ingnition property, the internal combustion engine including also means for fuel heating (9) prior to fuel injection, said internal combustion engine being characterized by the capacity to divide the fuel charge of each cycle in two or three portions of different amount, and to inject these portions in a selected order and at selected timings using only one injection pump, the portions of the fuel charge including a main portion which is injected into the open combustion chamber (3), preceded by a small fuel portion injected into the separate combustion chamber (5) or into the open combustion chamber (3) as the combustion chamber of each cylinder is divided or undivided, respectively, the main portion of the fuel charge being optionally followed by a small fuel portion injected into the open combustion chamber (3) if such injection improves the engine operation, the small portions of the fuel charge being achieved by the accumulation of a part of the fuel delivered by the injection pump (11) during the injection of the main portion of the fuel charge, the accumulated fuel being injec ted by fuel expansion, the accumulation, injection, and the control of timing and amount of each small portion of the fuel charge being achieved by means including in combination
- an accumulator connected with the injection pump and with the nozzle chamber,
- means which prevents the discharge of the accumulator into high pressure channel,
- means which control the timing of the discharges of accumulator towards the nozzle chamber,
- means which control the amounts of fuel discharged from the accumulator towards the nozzle chamber.
- means which control the fuel pressure in the accumulator.

2. An internal combustion engine as defined in Claim 1, characterized in that said means which prevents the discharge of the accumulator into high pressure channel include one-way check valves (27, 29).

3. An internal combustion engine as defined in Claim 2, characterized in that each cylinder includes an open combustion chamber connected with a separate combustion chamber, each combustion chamber being provided with its own injector, each injector being provided with its own accumulator located inside or outside the respective injector.

4. An internal combustion engine as defined in Claim 2, characterized in that each cylinder includes an open combustion chamber provided with an injector, said accumulator being located inside or outside the injector, said portions of the fuel charge being injected into the open combustion chamber through the injector of this chamber.

5. An internal combustion engine as defined in Claim 3, characterized in that said means which control the timing and the amount of fuel discharged from the accumulator towards the nozzle chamber of the injector of separate combustion chamber include a 2-way electromagnetic valve (23) electronically programmed, located on the connection between the accumulator and the nozzle chamber of this injector, the means which control the timing and the amount of fuel discharged from the accumulator of the injector of open chamber include a 3-way electromagnetic valve (62) electronically programmed, which can connect the nozzle chamber of the injector either to the accumulator, or to high pressure channnel of the injector.

6. An internal combustion engine as defined in Claim 5, characterized in that said means which control the timing of the discharge of the accumulator (29) of the injector of separate combustion chamber towards the nozzle chamber (16) of this injector include an accumulator discharge valve (34), said accumulator discharge valve including a chamber (38) connected to high pressure channel (25) by a channel (40) provided with a one-way check valve (39), chamber (38) being also connected to high pressure channel (25) by a control channel (41, 42) provided with a 2-way electromagnetic valve (23) electronically programmed, the accumulator discharge valve (34) being opened by the pressure of the fuel existing in the connection between the accumulator (29) and the nozzle chamber (16), when the 2-way electromagnetic valve (23) opens the connection between the chamber (38) of the accumulator discharge valve (34) and the high pressure channel (25), and closed by the pressure of the fuel trapped in the valve chamber (38) when said 2-way electromagnetic valve (23) is closed.

7. An internal combustion engine as defined in Claim 5, characterized in that said means which control the amount of fuel discharged from the accumulator (29) of the injector of separate combustion chamber towards the nozzle chamber (16) of this injector includes a 2-way electromagnetic valve (56) electronically programmed, connected to the nozzle chamber (16), and to the 2-way electromagnetic valve (23) which controls the timing of the accumulator discharge, said means which control the timing of the discharge of the accumulator of the injector of open combustion chamber towards the nozzle chamber of this injector include a 2-way electromagnetic valve electronically programmed, located on the connection between this accumulator and the 3-way electromagnetic valve (62).

8. An internal combustion engine as defined in any of the Claims 5 to 7 characterised in that the accumulator of the the injector of open chamber, and its connections and controls are eliminated.

9. An internal combustion engine as defined in any of the Claims 5, 7 and 8, characterized in that the 2-way electromagnetic valve (23/56) of the injector of separate combustion chamber which is connected to nozzle chamber is substituted with a 3-way electromagnetic valve which have the same connections as the substituted valve, and is also connected to high pressure channel (25), which allows the discharge of the nozzle chamber (16) at the end of fuel injection into separate combustion chamber.

10. An internal combustion engine as defined in Claim 4, characterized in that the nozzle chamber (16) is connected to high pressure channel (25) by a channel (61) provided with a one-way check valve (59), said means which control the timing of the discharge of accumulator (29) towards the nozzle chamber (16) include an accumulator discharge valve (34), said accumulator discharge valve including a chamber (38) connected to high pressure channel (25) by a channel (40) provided with a one-way check valve (39), chamber (38) being also connected to high pressure channel (25) by a control channel (41, 42) provided with a 2-way electromagnetic valve (23) electronically programmed, the accumulator discharge valve (34) being opened by the pressure of the fuel existing in the connection between the accumulator (29) and the nozzle chamber (16), when the 2-way electromagnetic valve (23) opens the connection between the chamber (38) of the accumulator discharge valve (34) and the high pressure channel (25), and closed by the pressure of the fuel trapped in the valve chamber (38) when said 2-way electromagnetic valve (23) is closed.

11. An internal combustion engine as defined in Claim 4, characterized in that said means which control the timing of the discharge of accumulator (29) towards the nozzle chamber (16) includes a 2-way electromagnetic valve (23) electronically programmed, located on the the connection between the accumulator (29) and the nozzle chamber (16).

12. An internal combustion engine as defined in Claim 11, characterized in that the nozzle chamber (16) is connected to high pressure channel (25) by a channel (61) provided with a one-way check valve (59), said means which control the amount of small portions of the fuel charge include a 2-way electromagnetic valve (56) electronically programmed, located on the connection between said 2-way electromagnetic valve (23) and the nozzle chamber (16).

13. An internal combustion engine as defined in Claim 11, characterized in that said means which control the amount of small portions of the fuel charge include a 3-way electromagnetic valve (62) electronically programmed, which can connect the nozzle chamber (16) either to said 2-way electromagnetic valve (23) or to high pressure channel (25).

14. An internal combustion engine as defined in Claim 4, characterized in that said means ehich control the timing and the amount of the discharge of accumulator (29) include a 3-way electromagnetic valve (62) electronically programmed, which can connect the nozzle chamber (16) either to accumulator (29), or to high pressure channel (25).

15. An internal combustion engine as defined in any of the Claims 12 to 14, characterized in that the accumulator (29) is discharged twice towards the nozzle chamber (16) during each engine cycle, the first of these discharges preceding, and the second discharge following the injection of the main portion of the fuel charge.

16. An internal combustion engine as defined in any of the Claims 5 to 15, characterized in that said means which control the fuel pressure in the accumulator include a 2-way electromagnetic valve electronically programmed, located on the connection between the accumulator and high pressure channel of the respective injector, upstream from the one-way check valve (27) which prevents the discharge of the accumulator into high pressure channel.

17. an internal combustion engine as defined in any of the Claims 5 to 15, characterised in that said means which control the fuel pressure in the accumulator include a pressure control valve (49) which controls a connection between the accumulator (29) and said drain, said pressure control valve being actuated by the nozzle spring (32) whose force acts in teh sense of valve closing, said pressure control valve including a chamber (53) in open connection with high pressure channel (25), the force generated on the pressure control valve (49) by the fuel pressure in said chamber (53) acting in the sense of valve closing, said pressure control valve (49) being designed to remain closed during the injection of said main portion of the fuel charge, and to open after the injection of main portion of the fuel charge, when the fuel pressure in high pressure channel (25) has decreased, which allows the partial discharge of the accumulator (29) into said drain.

18. An internal combustion engine as defined in any of the Claims 5 to 15, characterized in that said means which control the fuel pressure in the accumulator include a pressure relief valve (65) actuated by the nozzle spring (32), said pressure relief valve limiting the maximum pressure in tha accumulator (29) to a selected value.

FIG. 1

FIG. 2

FIG. 3

FIG. 4

FIG. 5

FIG. 6

FIG. 7

FIG. 8

FIG. 9

FIG. 10

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-130742 (HENRY KENT-NORRIS)<br>* page 5, line 24 - page 6, line 46; figures 1, 2 * | 1, 3 | F02M45/02<br>F02M45/08<br>F02B19/10 |
| A | US-A-2627254 (K. J. DE JUHASZ)<br>* column 3, line 48 - column 7, line 58; figures 1-4 * | 1, 4 | |
| A | EP-A-145796 (BARANESCU)<br>* page 3, line 30 - page 6, line 24; figure 1 * | 1 | |
| A | DE-A-1942610 (ROBERT BOSCH GMBH)<br>* page 4, line 26 - page 10, line 5; figures 1-4 * | 1, 2, 7, 10 | |
| A | DE-A-2064554 (DAIMLER-BENZ AG)<br>* page 6, line 21 - page 8, line 6; figures 2-4 * | 1, 7, 10, 11 | |
| A | FR-A-2449795 (INSTITUT FUR MOTORENBAU PROFESSOR HUBER EV)<br>* page 10, line 14 - page 11, line 5 *<br>* page 14, line 10 - page 16, line 24; figures 3, 10, 11 * | 1, 4-6, 9 | TECHNICAL FIELDS SEARCHED (Int. Cl.5)<br><br>F02M<br>F02B |
| E | US-A-4796577 (BARANESCU)<br>* column 2, line 36 - column 6, line 30; figure 3 * | 1, 2, 4, 9 | |

The present search report has been drawn up for all claims

| Place of search | Date of completion of the search | Examiner |
|---|---|---|
| THE HAGUE | 07 SEPTEMBER 1989 | HAKHVERDI M. |